# EUROPEAN PATENT APPLICATION

(11) **EP 2 109 327 A1**
(43) Date of publication of application: **14.10.2009**
(21) Application number: 08704210.7
(22) Date of filing: 30.01.2008
(51) Int. Cl.: H04Q 7/36, H04B 7/26

(54) **BASE STATION DEVICE, USER DEVICE AND TRACKING AREA SETTING METHOD**

(30) Priority: 02.02.2007 JP 2007024893
(71) Applicant: NTT DoCoMo, Inc., Chiyoda-ku Tokyo 100-6150 (JP)
(72) Inventor: IWAMURA, Mikio, Tokyo 100-6150 (JP); NAKAMURA, Takehiro, Tokyo 100-6150 (JP); KATO, Yasuhiro, Tokyo 100-6150 (JP); HAPSARI, Wuri Andarmawanti, Tokyo 100-6150 (JP)
(74) Representative: HOFFMANN EITLE
(86) International application number: PCT/JP2008/051447
(87) International publication number: WO 2008/093749

(57) **Abstract**

A base station in a mobile communication system is disclosed. In the mobile communication system, user devices present in areas covered by existing base stations report tracking area identifiers of tracking areas to which the existing base stations belong. The base station includes a statistical processing unit configured to count the number of the tracking area identifiers reported by the user devices for each of the tracking areas; and a tracking area selecting unit configured to assign the base station one of the tracking areas corresponding to the largest number of the tracking area identifiers counted by the statistical processing unit.

## Description

### TECHNICAL FIELD

The present invention generally relates to a Long Term Evolution (LTE) system. More particularly, the present invention relates to a base station, a user device, and a tracking area setting method.

### BACKGROUND ART

A successor communication system to W-CDMA and HSDPA (collectively called UMTS), i.e., Long Term Evolution (LTE), is currently being discussed by 3GPP that is a standardization group for UMTS. In LTE, orthogonal frequency division multiplexing (OFDM) is to be used as a downlink radio access method and single-carrier frequency division multiple access (SC-FDMA) is to be used as an uplink radio access method (see, for example, 3GPP TR 25.814 (V7.0.0), "Physical Layer Aspects for Evolved UTRA," June 2006).

In UMTS, when a new cell is to be introduced, the location of a base station, antenna parameters, radio parameters, and so on are simulated using, for example, a simulation tool and link budgets (see, for example, W-CDMA Mobile Communication System, pp.197-199, Keiji Tachikawa, Maruzen, 2001). Then, a new base station is installed based on the simulation results. Before its actual operation is started, a test operation of the new base station is performed by transmitting pilot channels. The administrator measures radio signals transmitted from the new base station with a radio signal measuring device and adjusts the radio parameters based on the results. The radio signal measuring device is mounted on a dedicated vehicle which is driven along roads in a target area to measure the radio signals.

In a mobile communication network, the location of a user device in the idle mode is registered in the network based on tracking areas. A tracking area corresponds to a location area (LA) or a routing area (RA) in UMTS and is composed of one or more cells.

In UMTS, when a new cell is to be introduced, the tracking area of the new cell is simulated by, for example, estimating the frequency of updating the tracking area based on the population distribution in an area where the new cell is to be introduced.

### DISCLOSURE OF INVENTION

### PROBLEMS TO BE SOLVED BY THE INVENTION

However, the above background art technologies have problems as described below.

For example, designing and operating a new base station require a huge workload particularly to perform the simulation and the measurement of radio wave propagation conditions and thereby to optimize the antenna and radio parameters and the tracking area. In 3GPP, to reduce the workload, a mechanism for automatically configuring a new base station in a LTE system has been proposed. In the proposed mechanism, a new base station is connected via a cable to a network and is automatically configured when it is turned on (see, for example, 3GPP R2-061929, June 2006). Since it is expected that a large number of small base stations such as home-use base stations will be introduced to meet future communication demands, implementation of such an automatic configuration mechanism is desired.

However, this proposal is still just a concept and specific configurations of a base station and a user device have not been proposed yet.

When a base station is newly installed, it is necessary to configure radio parameters based on the reception quality, at various locations, of radio signals transmitted from the newly-installed base station. Also, when a new cell is introduced, it is necessary to automatically set a tracking area of the new cell.

One object of the present invention is to solve or reduce one or more of the above problems and to provide a base station, a user device, and a tracking area setting method that make it possible to automatically set a tracking area of a newly-installed base station.

### MEANS FOR SOLVING THE PROBLEMS

An aspect of the present invention provides a base station in a system where user devices present in areas covered by existing base stations report tracking area identifiers of tracking areas to which the existing base stations belong. The base station includes a statistical processing unit configured to count the number of the tracking area identifiers reported by the user devices for each of the tracking areas; and a tracking area selecting unit configured to assign the base station one of the tracking areas corresponding to a largest number of the tracking area identifiers counted by the statistical processing unit.

This configuration enables a newly-installed base station to determine a tracking area to be assigned to itself based on reports from user devices including identifiers of tracking areas of existing base stations covering areas where the user devices are present.

Another aspect of the present invention provides a base station in a system where user devices report cell identifiers of serving cells where the user devices are present and/or cell identifiers of neighboring cells around the respective serving cells together with reception quality measurements of pilot channels sent from the serving cells and/or reception quality measurements of pilot channels sent from the neighboring cells. The base station includes a statistical processing unit configured to perform statistical processing on the reception quality measurements reported by the user devices; a tracking area selecting unit configured to determine a tracking area to be assigned to the base station based on results of the statistical processing; and a tracking area setting unit configured to set the tracking area determined by the tracking area selecting unit.

This configuration enables a newly-installed base station to determine a tracking area to be assigned to itself based on reports from user devices including identifiers of existing base stations covering serving cells of the user devices and reception quality measurements of pilot channels sent from the existing base stations.

Another aspect of the present invention provides a user device in a system where an existing base station sends a measurement report request signal to user devices present in a serving cell covered by the existing base station to request the user devices to measure reception quality of a pilot channel sent from the serving cell and/or reception quality of pilot channels sent from neighboring cells around the serving cell and to report the measurements of the reception quality together with a cell ID of the serving cell and/or cell IDs of the neighboring cells to a newly-installed base station. The user device includes a reception quality measuring unit configured to measure the reception quality of the pilot channel sent from the serving cell and/or the reception quality of the pilot channels sent from the neighboring cells according to the measurement report request signal; and a reporting unit configured to report the measurements of the reception quality together with the cell ID of the serving cell and/or the cell IDs of the neighboring cells to the newly-installed base station.

This configuration enables a user device present in a serving cell covered by an existing base station to measure reception quality of a pilot channel sent from the serving cell and/or reception quality of pilot channels sent from neighboring cells around the serving cell and to report the measurements of the reception quality together with a cell ID of the serving cell and/or cell IDs of the neighboring cells to a newly-installed base station according to a measurement report request signal from the existing base station.

Still another aspect of the present invention provides a tracking area setting method including a reporting step, performed by user devices, of reporting identifiers of existing base stations covering areas where the user devices are present and reception quality measurements of pilot channels sent from the existing base stations; a statistical processing step, performed by a newly-installed base station, of performing statistical processing on the reception quality measurements reported by the user devices; a tracking area selecting step, performed by the newly-installed base station, of determining a tracking area to be assigned to the newly-installed base station based on results of the statistical processing; and a tracking area setting step, performed by the newly-installed base station, of setting the tracking area determined in the tracking area selecting step.

This configuration enables a newly-installed base station to determine a tracking area to be assigned to itself based on reports from user devices including identifiers of existing base stations covering areas where the user devices are present and reception quality measurements of pilot channels sent from the existing base stations.

### ADVANTAGEOUS EFFECT OF THE INVENTION

An aspect of the present invention provides a base station, a user device, and a tracking area setting method that make it possible to automatically set a tracking area of a newly-installed base station.

### BRIEF DESCRIPTION OF THE DRAWINGS

FIG. 1 is a drawing illustrating an exemplary mobile communication system according to an embodiment of the present invention;
FIG. 2 is a partial block diagram of a base station according to an embodiment of the present invention;
FIG. 3 is a graph showing a cumulative distribution function of reception quality;
FIG. 4 is a partial block diagram of a user device according to an embodiment of the present invention;
FIG. 5 is a sequence chart showing a process in a mobile communication system according to an embodiment of the present invention; and
FIG. 6 is another sequence chart showing a process in a mobile communication system according to an embodiment of the present invention.

### EXPLANATION OF REFERENCES

- 100,100₁, 100₂, 100₃, 100₄: User device
- 102: Cell search unit
- 104: Broadcast channel receiving unit
- 106: Control unit
- 108: Reception quality measuring unit
- 110: Reporting unit
- 200,200₁, 200₂, 200₃, 200₄: Base station
- 202,202₁, 202₂, 202₃, 202₄: Cell
- 204,204₁, 204₂: Tracking area
- 206: Transceiver antenna
- 208: Duplexer
- 210: RF transmission unit
- 212: Broadcast channel generating unit
- 214: State setting unit
- 216: RF reception unit
- 218: RRC protocol processing unit
- 220: Statistical processing unit
- 222: Tracking area selecting unit
- 224: Network interface
- 300: Access gateway (aGW)
- 400: Home location register (HLR)
- 500: Core network

### BEST MODE FOR CARRYING OUT THE INVENTION

The best mode for carrying out the invention is described based on the following embodiments with reference to the accompanying drawings.

Throughout the accompanying drawings, the same reference numbers are used for parts having the same functions, and overlapping descriptions of those parts are omitted.

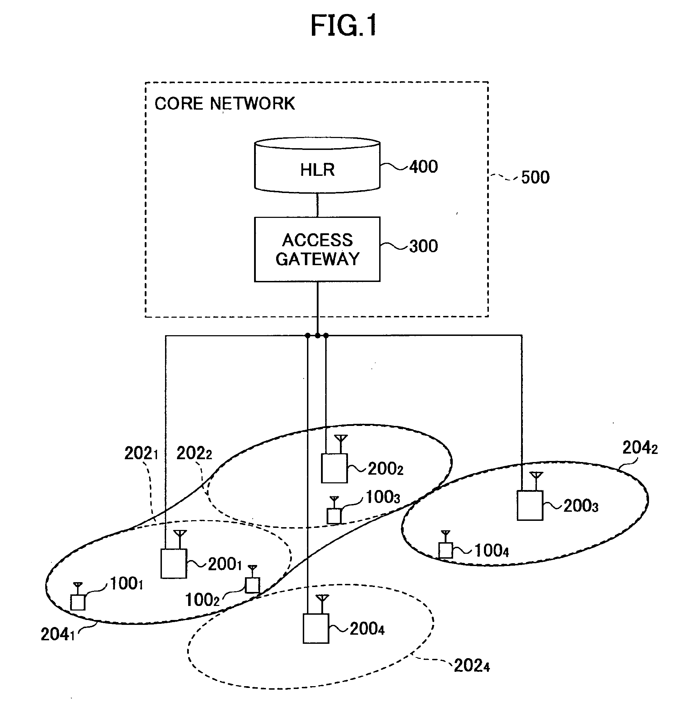

A mobile communication system according to an embodiment of the present invention is described below with reference to FIG. 1.

The mobile communication system of this embodiment is based on, for example, Evolved UTRA and UTRAN (also called Long Term Evolution or Super 3G).

The mobile communication system includes base stations (eNode B: eNB) 200ₘ (m is an integer greater than 1) and user devices (user equipment: UE) 100ₙ (n is an integer greater than 0). In the example of FIG. 1, the mobile communication system includes base stations 200₁, 200₂, 200₃, and 200₄ and user devices 100₁, 100₂, 100₃, and 100₄. In this embodiment, it is assumed that the base stations 200₁, 200₂, and 200₃ have already been installed and the base station 200₄ is to be newly installed near the base stations 200₁, 200₂, and 200₃. In the descriptions below, the base stations 200₁, 200₂, and 200₃ may be called existing base stations and the base station 200₄ may be called a newly-installed base station.

The base stations 200₁, 200₂, 200₃, and 200₄ cover cells 202₁, 202₂, 202₃, and 202₄, respectively. In this embodiment, it is also assumed that the cells 202₁ and 202₂ constitute a tracking area 204₁ and the cell 202₃ constitutes a tracking area 204₂. Cells constituting each tracking area may be changed as necessary. In FIG. 1, the cell 202₃ is not indicated since the cell 202₃ equals the tracking area 204₂.

An access gateway 300 (aGW) is provided, for example, in a core network 500. The access gateway 300 includes a table (hereafter called a tracking-area-and-cell mapping table) indicating the correspondence between tracking areas and their constituent cells (base stations). The access gateway 300 may be provided in a network other than the core network 500. Also, the access gateway 300 may be divided into a control plane (C-plane) logical entity and a user plane (U-plane) logical entity: a mobility management entity (MME) and a user plane entity (UPE). A home location register (HLR) 400 is also provided in the core network 500. The home location register 400 stores the identifier of the access gateway 300 managing the user devices 100ₙ.

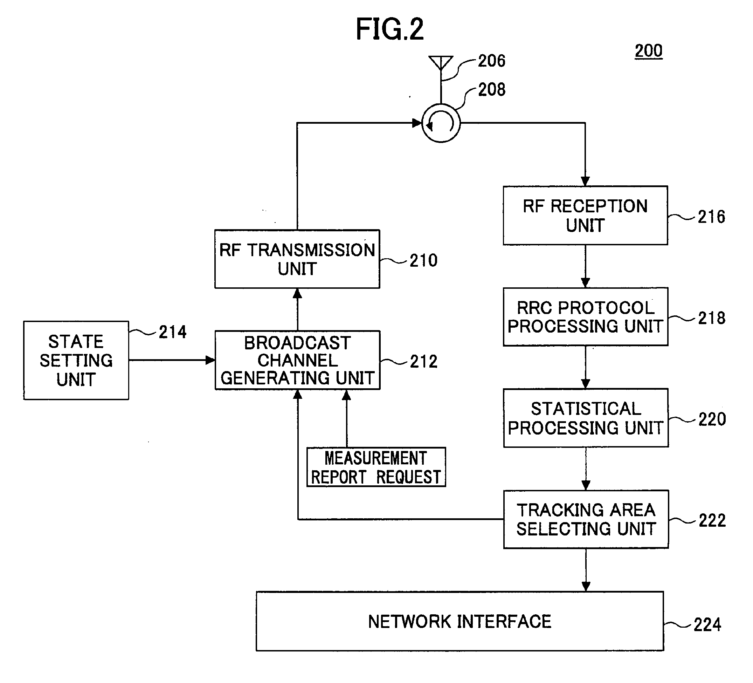

The base station 200 (any one of the base stations 200ₘ) of this embodiment is described below with reference to FIG. 2.

When the base station 200 is newly installed and in a pre-operation state, the base station 200 broadcasts information, e.g., an indicator, indicating that the base station 200 is in the pre-operation state.

The pre-operation state refers to a state where the actual operation of a newly-installed base station has not been started yet. The base station 200₄, which is a newly-installed base station, is turned on, for example, after being connected to a network via a cable. Assuming that the newly-installed base station is connected to an IP network, processes such as IP address determination, server detection, authentication, association with an upper node, and activation of programs are performed. After those processes, the newly-installed base station can transmit reference symbols (pilot signal), a synchronization channel, and a minimum set of broadcast information. At this stage, the newly-installed base station still cannot provide any communication service for users. However, even at this stage, the newly-installed base station can receive measurement reports from the user devices 100ₙ. Thus, at this stage, dedicated channels are established between the newly-installed base station and the user devices 100ₙ. This state is called the pre-operation state. Accordingly, when the base station 200 is in the pre-operation state, the user devices 100ₙ cannot enter the idle mode in the cell of the base station 200 and cannot access the cell.

Meanwhile, when the base station 200 (first base station) is in actual operation and a tracking area is to be assigned to a base station (newly-installed base station) newly installed in the neighborhood of the first base station, the first base station sends a measurement report request signal to the user devices 100ₙ in a cell (serving cell) covered by the first base station. The measurement report request signal requests the user devices 100ₙ to measure the reception quality of a pilot channel sent from the first base station and the reception quality of pilot channels sent from neighboring cells around the serving cell, i.e., from other base stations around the first base station, and to report the reception quality measurements, a cell ID of the serving cell (ID of the first base station covering the serving cell), and cell IDs of the neighboring cells around the serving cell (IDs of the other base stations covering the neighboring cells) to the newly-installed base station.

The base station 200 includes a transceiver antenna 206, a duplexer 208, an RF transmission unit 210, a broadcast channel generating unit 212, a state setting unit 214, an RF reception unit 216, an RRC protocol processing unit 218, a statistical processing unit 220, a tracking area selecting unit 222, and a network interface 224.

The state setting unit 214 sets the base station 200, for example, to an in-operation state or the pre-operation state. For example, if the base station 200 is a newly-installed base station, the state setting unit 214 sets an indicator indicating that the base station 200 is in the pre-operation state and inputs the indicator to the broadcast channel generating unit 212.

The broadcast channel generating unit 212 generates a broadcast channel including the indicator indicating the pre-operation state, which is, for example, represented by one bit, and sends the broadcast channel via the RF transmission unit 210 and the duplexer 208.

Also, when a base station is newly installed near the base station 200, a measurement report request is input to the broadcast channel generating unit 212 to cause the broadcast channel generating unit 212 to request the user devices 100ₙ in a cell (serving cell) covered by the base station 200 to measure the reception quality of a pilot channel sent from the base station 200 and the reception quality of pilot channels sent from neighboring cells around the serving cell and to report the reception quality measurements, a cell ID of the serving cell, and cell IDs of the neighboring cells to the newly-installed base station. The broadcast channel generating unit 212 generates a measurement report request signal based on the input measurement report request and sends the measurement report request signal via the RF transmission unit 210 and the duplexer 208.

When receiving the measurement report request signal, each of the user devices 100ₙ measures the reception quality of the pilot channel from the serving cell and the pilot channels from the neighboring cells around the serving cell. Then, each of the user devices 100ₙ sends a measurement report including the cell ID of the serving cell, a reception quality measurement of the pilot channel from the serving cell, the cell IDs of the neighboring cells, and reception quality measurements of the pilot channels from the neighboring cells. Hereafter, the cell ID of the serving cell and the cell IDs of the neighboring cells may be called cell IDs of existing cells, and the reception quality measurement of the pilot channel from the serving cell and the reception quality measurements of the pilot channels from the neighboring cells may be called reception quality measurements of existing cells.

Measurement reports sent from the respective user devices 100ₙ are received via the transceiver antenna 206 and the duplexer 208 by the RF reception unit 216 and input to the RRC protocol processing unit 218.

The RRC protocol processing unit 218 inputs reception quality measurements of existing cells in the measurement reports together with the cell IDs of the existing cells to the statistical processing unit 220 based on the RRC protocol.

The statistical processing unit 220 performs statistical processing or calculations based on the input reception quality measurements of the existing cells. For example, the statistical processing unit 212 calculates an average of the reception quality measurements for each of the existing cells. The average may be obtained by averaging all reception quality measurements of each existing cell or by averaging reception quality measurements of each existing cell that are greater than or equal to a predetermined threshold.

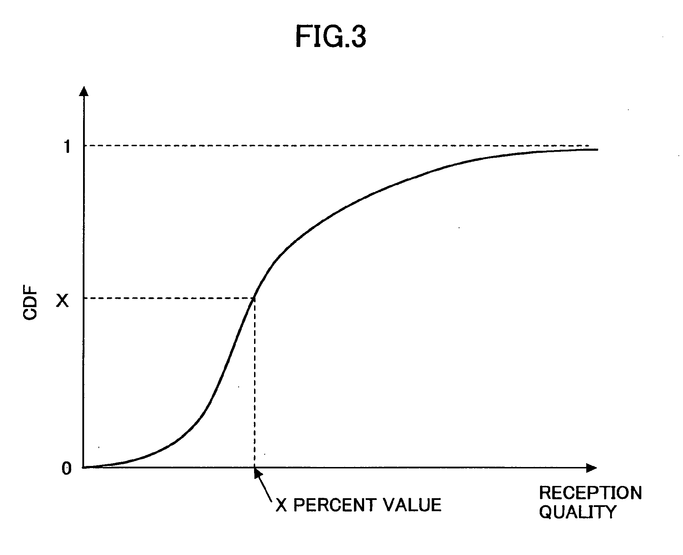

Alternatively, the statistical processing unit 212 may be configured to obtain a cumulative distribution function (CDF) of the reception quality measurements for each of the existing cells and to output a predetermined percent value (e.g., X percent value) of the reception quality measurements as shown in FIG. 3. The cumulative distribution function may be obtained based on all reception quality measurements of each existing cell or based on reception quality measurements of each existing cell that are greater than or equal to a predetermined threshold. The statistical processing unit 212 inputs the calculation results together with the corresponding cell IDs of the existing cells to the tracking area selecting unit 222.

The tracking area selecting unit 222 selects a tracking area for the base station 200 (here, it is assumed that the base station 200 is a newly-installed base station, i.e., the base station 200₄) based on the input calculation results. For example, the tracking area selecting unit 222 compares averages or percent values of the reception quality measurements of the existing cells and selects one of the existing cells corresponding to the highest average or percent value. Then, the tracking area selecting unit 222 sends a tracking area request signal via the network interface 224 to the access gateway 300 to query the access gateway 300 for a tracking area to which the selected existing cell belongs. The tracking area request signal includes the cell ID of the selected existing cell corresponding to the highest average or percent value. As described above, the access gateway 300 includes a tracking-area-and-cell mapping table. The access gateway 300 identifies a tracking area to which the selected existing cell belongs based on the cell ID in the tracking area request signal sent from the newly-installed base station 200₄ and reports the tracking area ID of the identified tracking area to the newly-installed base station 200₄.

The tracking area selecting unit 222 inputs the reported tracking area (ID) to the broadcast channel generating unit 212. The broadcast channel generating unit 212 sets the input tracking area.

Alternatively, the tracking area selecting unit 222 may be configured to send a tracking area request signal including the cell IDs of the existing cells reported by the measurement reports to the access gateway 300 to obtain tracking areas to which the existing cells belong. In this case, the tracking area selecting unit 222 counts the number of existing cells reported by the user devices 100ₙ for each of the obtained tracking areas and to assign one of the tracking areas corresponding to the largest number of existing cells to the newly-installed base station 200₄.

After the tracking area of the base station 200₄ is set, the tracking area selecting unit 222 sends information indicating the set tracking area together with the cell ID of the base station 200₄ via the network interface 224 to the access gateway 300. The access gateway 300 updates the tracking-area-and-cell mapping table based on the information indicating the set tracking area and the cell ID sent from the base station 200₄.

The tracking area request signal sent from the base station 200₄ to the access gateway 300 may include the cell ID of the base station 200₄ in addition to the cell ID of the selected existing cell corresponding to the highest average or percent value. In this case, the access gateway 300, in addition to reporting the identified tracking area ID to the base station 200₄, updates the tracking-area-and-cell mapping table based on the cell ID of the base station 200₄ in the tracking area request signal and the identified tracking area ID.

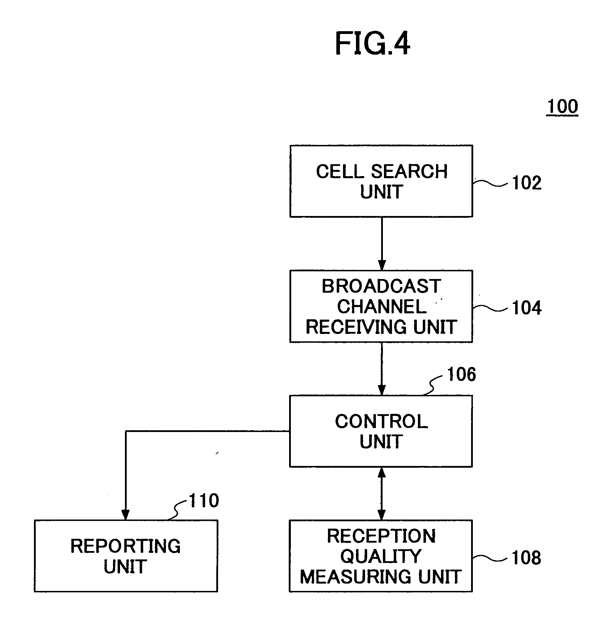

Next, the user device 100 (any one of the user devices 100ₙ) of this embodiment is described with reference to FIG. 4.

When receiving a measurement report request signal from the base station 200, the user device 100 measures the reception quality of a pilot channel from the serving cell and pilot channels from neighboring cells around the serving cell. Then, the user device 100 sends a measurement report including the cell IDs of the existing cells (the serving cell and the neighboring cells) and the reception quality measurements of the existing cells to a newly-installed base station. At this stage, a dedicated channel is established between the newly-installed base station and the user device 100.

The user device 100 includes a cell search unit 102, a broadcast channel receiving unit 104, a control unit 106, a reception quality measuring unit 108, and a reporting unit 110.

The cell search unit 102 performs a cell search at predetermined intervals, for example, every 200 ms. If a new cell is found, the cell search unit 102 detects a transmission band of a broadcast channel based on a received synchronization channel and inputs the detected transmission band to the broadcast channel receiving unit 104. Also, when a measurement report is to be sent to a newly-installed base station, the cell search unit 102 establishes a dedicated channel with the newly-installed base station.

The broadcast channel receiving unit 104 receives a broadcast channel based on the transmission band input from the cell search unit 102 and inputs broadcast information to the control unit 106.

The control unit 106 determines whether a measurement report request signal is included in the broadcast information input from the broadcast channel receiving unit 104.

If a measurement report request signal is included in the broadcast information, the control unit 106 requests the reception quality measuring unit 108 to measure the reception quality, e.g., SIRs, of existing cells. The control unit 106 inputs the reception quality measurements of the existing cells measured by the reception quality measuring unit 108 together with the corresponding cell IDs of the existing cells to the reporting unit 110. The reporting unit 110 reports the cell IDs and the reception quality measurements of the existing cells to the newly-installed base station.

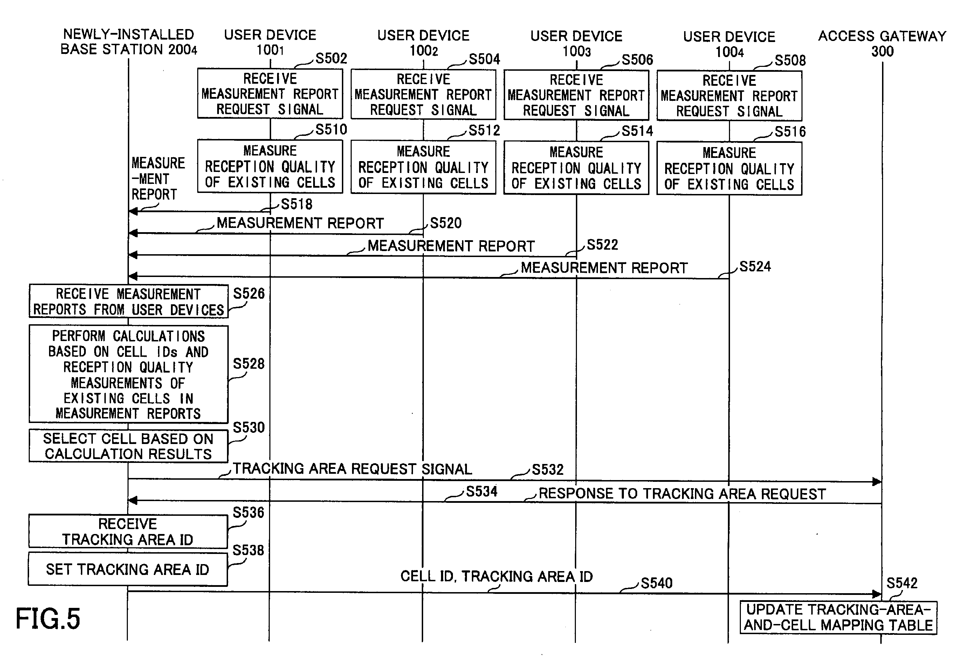

Next, an exemplary process in the mobile communication system of this embodiment is described with reference to FIG. 5.

When a base station is newly installed and a tracking area of the newly-installed base station is to be determined, each existing base station that is in actual operation and situated in the neighborhood of the newly-installed base station sends a measurement report request signal to user devices in a cell (serving cell) covered by the existing base station. The measurement report request signal requests the user devices to measure the reception quality of a pilot channel from the serving cell and the reception quality of pilot channels from neighboring cells around the serving cell and to send the newly-installed base station the reception quality measurements together with the cell IDs of the serving cell and the neighboring cells.

The broadcast channel receiving unit 104 of each of the user devices 100₁, 100₂, 100₃, and 100₄ receives a measurement report request signal from the corresponding base station covering a serving cell of the user device 100 (corresponding one of the user devices 100₁, 100₂, 100₃, and 100₄) (steps S502, S504, S506, and S508).

Next, the reception quality measuring unit 108 of each of the user devices 100₁, 100₂, 100₃, and 100₄ measures the reception quality of a pilot channel from the corresponding serving cell and the reception quality of pilot channels from neighboring cells around the serving cell (steps S510, S512, S514, and S516).

Then, the cell search unit 102 of each of the user devices 100₁, 100₂, 100₃, and 100₄ establishes a dedicated channel with the newly-installed base station and the reporting unit 110 sends a measurement report including the cell ID of the corresponding serving cell, a reception quality measurement of the pilot channel from the serving cell, the cell IDs of the neighboring cells, and reception quality measurements of the pilot channels from the neighboring cells (steps S518, S520, S522, and S524).

The RF reception unit 216 of the newly-installed base station 200₄ receives the measurement reports sent from the respective user devices 100₁, 100₂, 100₃, and 100₄ (step S526).

Next, the statistical processing unit 220 of the newly-installed base station 200₄ performs calculations based on the cell IDs of the existing cells (serving cells and neighboring cells) and the reception quality measurements of the existing cells in the measurement reports (step S528). For example, the statistical processing unit 212 calculates an average of the reception quality measurements for each of the existing cells.

The tracking area selecting unit 222 of the newly-installed base station 200₄ selects a tracking area for the base station 200₄ based on the calculation results. For example, the tracking area selecting unit 222 compares average reception quality measurements of the respective existing cells and selects one of the existing cells corresponding to the highest average reception quality measurement (step S530).

Then, the tracking area selecting unit 222 sends a tracking area request signal via the network interface 224 to the access gateway 300 to query the access gateway 300 for a tracking area to which the selected existing cell belongs (step S532).

The access gateway 300 sends a tracking area response including a tracking area ID to the newly-installed base station 200₄ (step S534).

The tracking area selecting unit 222 of the newly-installed base station 200₄ receives the tracking area response (step S536). The tracking area selecting unit 222 inputs the tracking area ID in the tracking area response to the broadcast channel generating unit 212.

The broadcast channel generating unit 212 of the newly-installed base station 200₄ sets the tracking area ID, for example, in a broadcast channel (step S538).

Then, the tracking area selecting unit 222 of the newly-installed base station 200₄ sends the tracking area ID and the cell ID of the base station 200₄ via the network interface 224 to the access gateway 300 (step S540).

The access gateway 300 updates the tracking-area-and-cell mapping table based on the tracking area ID and the cell ID sent from the base station 200₄ in step S540 (step S542).

Next, a mobile communication system according to another embodiment of the present invention is described below.

In the mobile communication system of this embodiment, the user device 100 sends a newly-installed base station a measurement report that also includes a tracking area ID of a tracking area where the user device 100 is present.

The newly-installed base station performs statistical processing for each tracking area based on measurement reports sent from multiple user devices 100 and thereby selects a tracking area.

Configurations of the mobile communication system, the base stations 200ₘ, and the user devices 100ₙ are substantially the same as those described with reference to FIGs. 1, 2, and 4, and therefore their descriptions are omitted here.

The reporting unit 110 of the user device 100 sends a measurement report including a tracking area ID of a tracking area to which the serving cell of the user device 100 belongs in addition to the cell IDs and the reception quality measurements of the existing cells to a newly-installed base station.

The statistical processing unit 220 of the newly-installed base station performs statistical processing (calculations) based on the reception quality measurements of the existing cells. For example, the statistical processing unit 212 calculates an average of the reception quality measurements of the existing cells for each tracking area. The average may be obtained by averaging all reception quality measurements of existing cells in each tracking area or by averaging reception quality measurements of existing cells in each tracking area that are greater than or equal to a predetermined threshold.

Alternatively, the statistical processing unit 212 may be configured to obtain a cumulative distribution function (CDF) of the reception quality measurements of the existing cells for each tracking area, to obtain a predetermined percent value (e.g., X percent value) of the reception quality measurements based on the cumulative distribution function, and to output the obtained percent value. The cumulative distribution function may be obtained based on all reception quality measurements of existing cells in each tracking area or based on reception quality measurements of existing cells in each tracking area that are greater than or equal to a predetermined threshold. The statistical processing unit 212 inputs the calculation results to the tracking area selecting unit 222.

The tracking area selecting unit 222 selects a tracking area for the newly-installed base station 200₄ based on the input calculation results. For example, the tracking area selecting unit 222 compares averages or percent values of the reception quality measurements of respective tracking areas and selects one of the tracking areas corresponding to the highest average or percent value. The tracking area selecting unit 222 inputs the selected tracking area to the broadcast channel generating unit 212. The broadcast channel generating unit 212 sets the input tracking area.

Alternatively, the tracking area selecting unit 222 may be configured to count the number of the tracking area IDs in the measurement reports for each tracking area and to assign a tracking area corresponding to the largest number of the tracking area IDs to the newly-installed base station 200₄.

After the tracking area of the newly-installed base station 200₄ is set, the tracking area selecting unit 222 sends information indicating the set tracking area together with the cell ID of the base station 200₄ via the network interface 224 to the access gateway 300. The access gateway 300 updates the tracking-area-and-cell mapping table based on the information indicating the set tracking area and the cell ID sent from the base station 200₄.

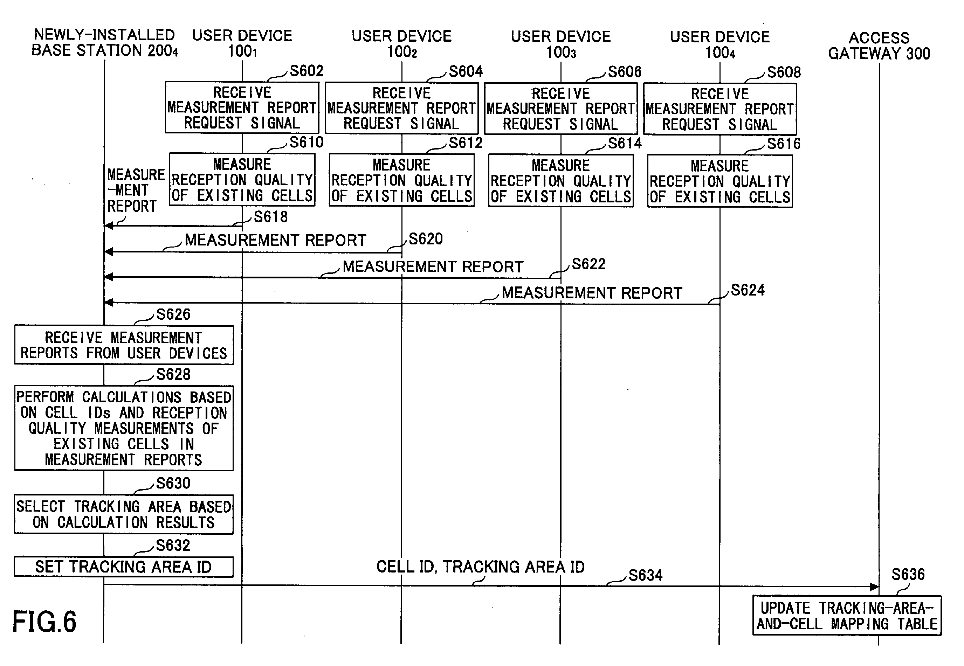

Next, an exemplary process in the mobile communication system of this embodiment is described with reference to FIG. 6.

When a base, station is newly installed and a tracking area of the newly-installed base station is to be determined, each existing base station that is in actual operation and situated in the neighborhood of the newly-installed base station sends a measurement report request signal to user devices in a cell (serving cell) covered by the existing base station. The measurement report request signal requests the user devices to measure the reception quality of a pilot channel from the serving cell and the reception quality of pilot channels from neighboring cells around the serving cell and to send the newly-installed base station the reception quality measurements together with the cell IDs of the serving cell and the neighboring cells (existing cells) and tracking area IDs of tracking areas to which the existing cells belong.

The broadcast channel receiving unit 104 of each of the user devices 100₁, 100₂, 100₃, and 100₄ receives a measurement report request signal from the corresponding base station covering a serving cell of the user device 100 (steps S602, S604, S606, and S608).

Next, the reception quality measuring unit 108 of each of the user devices 100₁, 100₂, 100₃, and 100₄ measures the reception quality of a pilot channel from the corresponding serving cell and the reception quality of pilot channels from neighboring cells around the serving cell (steps S610, S612, S614, and S616).

Then, the cell search unit 102 of each of the user devices 100₁, 100₂, 100₃, and 100₄ establishes a dedicated channel with the newly-installed base station and the reporting unit 110 sends a measurement report including the cell ID of the corresponding serving cell, a reception quality measurement of the pilot channel from the serving cell, the cell IDs of the neighboring cells, reception quality measurements of the pilot channels from the neighboring cells, and tracking area IDs of tracking areas to which the existing cells (the serving cell and the neighboring cells) belong (steps S618, S620, S622, and S624). For example, the reception quality measurements of the pilot channels from the existing cells are associated with the cell IDs of the existing cells, and the tracking area IDs are associated with the cell IDs of the existing cells.

The RF reception unit 216 of the newly-installed base station 200₄ receives the measurement reports sent from the respective user devices 100₁, 100₂, 100₃, and 100₄ (step S626).

Next, the statistical processing unit 220 of the newly-installed base station 200₄ performs calculations based on the tracking area IDs and the reception quality measurements of the existing cells in the measurement reports (step S628). For example, the statistical processing unit 212 calculates an average of the reception quality measurements of the existing cells for each tracking area. The average may be obtained by averaging all reception quality measurements of existing cells in each tracking area or by averaging reception quality measurements of existing cells in each tracking area that are greater than or equal to a predetermined threshold.

The tracking area selecting unit 222 of the newly-installed base station 200₄ selects a tracking area for the base station 200₄ based on the calculation results. For example, the tracking area selecting unit 222 compares average reception quality measurements of the respective tracking areas and selects one of the tracking areas corresponding to the highest average reception quality measurement (step S630).

The tracking area selecting unit 222 inputs the tracking area ID of the selected tracking area to the broadcast channel generating unit 212.

The broadcast channel generating unit 212 of the newly-installed base station 200₄ sets the tracking area ID, for example, in a broadcast channel (step S632).

Then, the tracking area selecting unit 222 of the newly-installed base station 200₄ sends the tracking area ID and the cell ID of the base station 200₄ via the network interface 224 to the access gateway 300 (step S634).

The access gateway 300 updates the tracking-area-and-cell mapping table based on the tracking area ID and the cell ID sent from the base station 200₄ in step S634 (step S636).

This embodiment makes it possible to cause user devices to report tracking areas to which their serving cells belong to a newly-installed base station and thereby enables the newly-installed base station to determine its tracking area.

In one embodiment described above, a user device sends a newly-installed base station the cell ID of a serving cell, a reception quality measurement of a pilot channel from the serving cell, the cell IDs of neighboring cells around the serving cell, and reception quality measurements of pilot channels from the neighboring cells. Alternatively, a user device may be configured to send a newly-installed base station the cell ID of a serving cell and a reception quality measurement of a pilot channel from the serving cell, or the cell IDs of neighboring cells around the serving cell and reception quality measurements of pilot channels from the neighboring cells.

In another embodiment described above, a user device sends a newly-installed base station the cell ID of a serving cell, the cell IDs of neighboring cells around the serving cell, a reception quality measurement of a pilot channel from the serving cell, reception quality measurements of pilot channels from the neighboring cells, and tracking area IDs of tracking areas to which the existing cells (the serving cell and the neighboring cells) belong. Alternatively, a user device may be configured to send the newly-installed base station only tracking area IDs (identifiers) of tracking areas to which the existing cells belong. In this case, the statistical processing unit 220 of the newly-installed base station counts the number of tracking area identifiers reported by user devices for each tracking area and assigns a tracking area corresponding to the largest number of tracking area identifiers to the newly-installed base station.

In the above embodiments, a user device reports cell IDs of existing cells. Alternatively, a user device may be configured to report synchronization channel patterns or scrambling code IDs of existing cells instead of the cell IDs. This configuration allows a newly-installed base station to detect existing base stations based on received synchronization channels, i.e., before receiving broadcast channels.

Also, a user device may be configured to report a cell ID and/or a scrambling code ID of a new cell to existing base stations. Further, a user device may be configured to report reception quality of a new cell. In this case, the reception quality of the new cell may be reported only when the reception quality is greater than or equal to a predetermined threshold.

The descriptions and drawings in the above embodiments should not be construed to be limiting the present invention. A person skilled in the art may think of variations of the above embodiments from the descriptions.

In other words, the present invention may also include various embodiments not disclosed above. Therefore, the technical scope of the present invention should be determined based on proper understanding of the claims with reference to the above descriptions.

Although the present invention is described above in different embodiments, the distinctions between the embodiments are not essential for the present invention, and the embodiments may be used individually or in combination. Although specific values are used in the above descriptions to facilitate the understanding of the present invention, the values are just examples and different values may also be used unless otherwise mentioned.

The present invention is not limited to the specifically disclosed embodiments, and variations and modifications may be made without departing from the scope of the present invention. Although functional block diagrams are used to describe apparatuses in the above embodiments, the apparatuses may be implemented by hardware, software, or a combination of them.

The present international application claims priority from Japanese Patent Application No. 2007-024893 filed on February 2, 2007, the entire contents of which are hereby incorporated herein by reference.

## Claims

1. A base station in a system where user devices present in areas covered by existing base stations report tracking area identifiers of tracking areas to which the existing base stations belong, the base station comprising:
a statistical processing unit configured to count a number of the tracking area identifiers reported by the user devices for each of the tracking areas; and
a tracking area selecting unit configured to assign the base station one of the tracking areas corresponding to a largest number of the tracking area identifiers counted by the statistical processing unit.

2. A base station in a system where user devices report cell identifiers of serving cells where the user devices are present and/or cell identifiers of neighboring cells around the respective serving cells together with reception quality measurements of pilot channels sent from the serving cells and/or reception quality measurements of pilot channels sent from the neighboring cells, the base station comprising:
a statistical processing unit configured to perform statistical processing on the reception quality measurements reported by the user devices;
a tracking area selecting unit configured to determine a tracking area to be assigned to the base station based on results of the statistical processing; and
a tracking area setting unit configured to set the tracking area determined by the tracking area selecting unit.

3. The base station as claimed in claim 2, wherein the statistical processing unit is configured to calculate an average of the reception quality measurements reported by the user devices for each existing base station.

4. The base station as claimed in claim 2, wherein the statistical processing unit is configured to obtain a cumulative distribution function of the reception quality measurements reported by the user devices for each existing base station and to obtain a predetermined percent value of the reception quality measurements based on the cumulative distribution function.

5. The base station as claimed in claim 3, wherein the tracking area selecting unit is configured to assign the base station the tracking area to which an existing base station corresponding to the highest average of the reception quality measurements belongs based on the results of the statistical processing.

6. The base station as claimed in claim 4, wherein the tracking area selecting unit is configured to assign the base station the tracking area to which an existing base station corresponding to the highest percent value of the reception quality measurements belongs based on the results of the statistical processing.

7. The base station as claimed in claim 3, wherein the statistical processing unit is configured to perform the statistical processing on the reception quality measurements greater than or equal to a predetermined threshold.

8. The base station as claimed in claim 2, wherein
the system includes an upper node including a table indicating a correspondence between tracking areas and existing base stations constituting the tracking areas; and
the tracking area selecting unit is configured to select one of the existing base stations based on the results of the statistical processing, to query the upper node for the tracking area to which the selected one of the existing base stations belongs, and thereby to determine the tracking area to be assigned to the base station.

9. A user device in a system where an existing base station sends a measurement report request signal to user devices present in a serving cell covered by the existing base station to request the user devices to measure reception quality of a pilot channel sent from the serving cell and/or reception quality of pilot channels sent from neighboring cells around the serving cell and to report the measurements of the reception quality together with a cell ID of the serving cell and/or cell IDs of the neighboring cells to a newly-installed base station, the user device comprising:
a reception quality measuring unit configured to measure the reception quality of the pilot channel sent from the serving cell and/or the reception quality of the pilot channels sent from the neighboring cells according to the measurement report request signal; and
a reporting unit configured to report the measurements of the reception quality together with the cell ID of the serving cell and/or the cell IDs of the neighboring cells to the newly-installed base station.

10. A tracking area setting method, comprising:
a reporting step, performed by user devices, of reporting identifiers of existing base stations covering areas where the user devices are present and reception quality measurements of pilot channels sent from the existing base stations;
a statistical processing step, performed by a newly-installed base station, of performing statistical processing on the reception quality measurements reported by the user devices;
a tracking area selecting step, performed by the newly-installed base station, of determining a tracking area to be assigned to the newly-installed base station based on results of the statistical processing; and
a tracking area setting step, performed by the newly-installed base station, of setting the tracking area determined in the tracking area selecting step.
